(19) **Europäisches Patentamt / European Patent Office / Office européen des brevets**

(11) **EP 1 971 974 B1**

(12) **FASCICULE DE BREVET EUROPEEN**

(45) Date de publication et mention de la délivrance du brevet:
**28.10.2009 Bulletin 2009/44**

(51) Int Cl.:
**G08G 5/02** *(2006.01)*     **G01C 23/00** *(2006.01)*
**G05D 1/06** *(2006.01)*

(21) Numéro de dépôt: **07717896.0**

(22) Date de dépôt: **10.01.2007**

(86) Numéro de dépôt international:
**PCT/FR2007/000036**

(87) Numéro de publication internationale:
**WO 2007/080313 (19.07.2007 Gazette 2007/29)**

(54) **PROCEDE ET DISPOSITIF D'AIDE AU PILOTAGE D'UN AERONEF LORS D'UNE APPROCHE AUTONOME**

VERFAHREN UND VORRICHTUNG ZUR FLUGHILFE FÜR EIN FLUGZEUG WÄHREND EINES AUTONOMEN LANDEANFLUGES

METHOD AND DEVICE FOR ASSISTING THE FLYING OF AN AIRCRAFT DURING AN AUTONOMOUS APPROACH

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **11.01.2006 FR 0600245**

(43) Date de publication de la demande:
**24.09.2008 Bulletin 2008/39**

(73) Titulaires:
• **AIRBUS OPERATIONS**
  **31060 Toulouse (FR)**
• **Airbus**
  **31700 Blagnac Cédex (FR)**

(72) Inventeurs:
• **MARKITON, Vincent**
  **F-31470 Fontenilles (FR)**
• **STRONGMAN, Edward**
  **F-31530 Bretx (FR)**
• **BARRE, François**
  **F-31830 Plaisance du Touch (FR)**

(74) Mandataire: **Hauer, Bernard**
  **Bloch & Bonnétat**
  **23bis, rue de Turin**
  **75008 Paris (FR)**

(56) Documents cités:
**EP-A- 1 335 258**     **US-A- 4 792 904**
**US-A- 5 593 114**

• **B.W. PARKINSON AND K.T. FITZGIBBON: "Aircraft Automatic Landing Systems Using GPS" Journal of Navigation UK, vol. 42, no. 1, janvier 1989 (1989-01), pages 47-59, XP009072529 ISSN: 0373-4633**

**Description**

La présente invention concerne un procédé et un dispositif d'aide au pilotage d'un aéronef, qui sont destinés à aider le pilotage de l'aéronef au moins lors d'une approche autonome d'une piste d'atterrissage en vue d'un atterrissage, en particulier dans le domaine militaire.

Dans l'état de la technique on connaît dans US 5,593,114 et EP 1, 335,258 le guidage d'aéronef et l'affichage des informations destinés à aider le pilotage en phase d'atterrissage.

Dans le cadre de la présente invention, on considère qu'une approche autonome doit permettre de faire voler l'aéronef, sans utilisation de moyens de navigation situés au sol, en conditions météorologiques de vol aux instruments de type IMC ("Instrument Meteorological Conditions" en anglais), jusqu'à une hauteur de décision, par exemple 200 pieds (environ 60 mètres), qui correspond à la hauteur de décision d'une approche de précision usuelle de type ILS ("Instrument Landing System" en anglais, à savoir système d'atterrissage aux instruments) de catégorie 1. Lors d'une telle approche autonome, les moyens de positionnement utilisés par l'aéronef sont donc exclusivement des moyens embarqués, et notamment un système de positionnement par satellites, par exemple de type GPS ("Global Positioning System" en anglais), une centrale inertielle, et des capteurs barométriques. L'approche peut également être réalisée sans contrôleur de l'espace aérien. A ladite hauteur de décision, l'équipage de l'aéronef doit visuellement acquérir la piste. Si tel est le cas, il finit l'atterrissage en mode à vue à l'aide d'un guidage manuel. En revanche, si à cette hauteur de décision, l'équipage ne voit pas la piste, il doit effectuer une remise des gaz de manière à faire remonter l'aéronef à une altitude de sécurité prédéterminée. La trajectoire d'approche utilisée pour réaliser une telle approche autonome est créée avant le vol et décrite sur une carte papier qui est à la disposition de l'équipage au cours du vol. Pour ce faire, la configuration du terrain autour de la piste d'atterrissage a été analysée et des marges vis-à-vis des obstacles ont été définis. Cette trajectoire d'approche est également sauvegardée dans une base de données du système de pilotage de l'aéronef.

Comme indiqué précédemment, la hauteur de décision d'une approche autonome telle que considérée dans la présente invention est la même que celle d'une approche de précision de catégorie 1, telle que mise en oeuvre dans le domaine civil. Pour mettre en oeuvre une telle approche de précision aux instruments de type ILS, on utilise de façon usuelle des stations sol qui sont situées en bordure de piste et au moins un récepteur radio spécialisé monté à bord de l'aéronef, qui fournit un guidage horizontal et vertical avant et pendant l'atterrissage en présentant au pilote la déviation latérale par rapport à un axe d'approche et la déviation verticale par rapport à un plan de descente. Une telle approche de précision aux instruments apporte une assistance importante et efficace à l'atterrissage, en particulier par mauvaise visibilité (brouillard, ...) ou en absence de visibilité. Une telle approche de précision aux instruments utilise donc des informations reçues de l'extérieur. Ceci n'est pas le cas dans l'approche autonome considérée dans la présente invention, pour laquelle l'aide au guidage est réalisée exclusivement à l'aide de moyens embarqués, comme indiqué ci-dessus.

Aussi, un axe d'approche qui est formé pour une approche de précision aux instruments ne peut pas être utilisé dans une approche autonome, en particulier en raison du fait que les performances de l'aéronef requises pour mettre en oeuvre une telle approche de précision aux instruments ne sont pas atteintes dans le cas d'une approche autonome.

On sait que les performances de l'aéronef se décomposent principalement en une composante de localisation et une composante de guidage. La composante de guidage permet d'évaluer la capacité de l'aéronef à suivre l'axe d'approche considéré avec une certaine précision. Quant à la composante de localisation, elle permet de garantir la position effective de l'aéronef. Ces performances sont considérées à la fois dans le plan vertical et dans le plan horizontal.

Or, dans le cas d'une approche autonome, pour lequel la localisation de l'aéronef est effectuée exclusivement à partir d'informations disponibles à bord de l'aéronef, les performances requises ne sont pas atteignables dans le plan vertical à cause de la marge d'erreur importante concernant la composante de localisation précitée.

Par conséquent, dans le cadre d'une approche autonome dans le domaine militaire, telle que considérée dans la présente invention, il n'est pas possible de mettre en oeuvre telle quelle une approche de précision aux instruments, telle qu'utilisée dans le domaine civil.

La présente invention a pour objet de remédier aux inconvénients précités. Elle concerne un procédé d'aide au pilotage d'un aéronef, qui est destiné à aider au pilotage de l'aéronef au moins lors d'une approche autonome d'une piste d'atterrissage en vue d'un atterrissage.

A cet effet, selon l'invention, ledit procédé selon lequel :

> a) on détermine un axe d'approche ; et
> b) on guide l'aéronef suivant ledit axe d'approche au moins jusqu'à une hauteur de décision, à l'aide exclusivement de moyens embarqués sur l'aéronef,

est remarquable en ce que :

- à l'étape a) :

a1) on détermine un axe d'approche principal qui est représentatif d'une approche de précision de catégorie 1 ; et
a2) on détermine une correction verticale et, à partir de cette correction verticale et dudit axe d'approche principal, on détermine un axe d'approche corrigé qui présente verticalement une marge supplémentaire relativement au terrain à survoler par rapport audit axe d'approche principal ; et

- à l'étape b), on guide ledit aéronef suivant ledit axe d'approche corrigé.

Ainsi, grâce à l'invention, on fait suivre à l'aéronef un axe d'approche corrigé qui présente une marge verticale relativement au terrain à survoler, par rapport à un axe d'approche déterminé de façon usuelle pour une approche de précision de catégorie 1. Par conséquent, cette marge verticale permet de sécuriser le vol de l'aéronef par rapport au sol lors de l'approche autonome pour laquelle (comme indiqué précédemment) les performances courantes de l'aéronef sont moindres que celles existant pour une approche usuelle de précision aux instruments de catégorie 1.

On notera que, grâce à l'invention, on peut utiliser les informations déterminées de façon usuelle pour une approche de précision de catégorie 1. Ceci permet notamment de faciliter la mise en oeuvre de l'invention. Une approche de précision aux instruments de catégorie 1 est notamment décrite dans l'annexe 10 de l'OACI (Organisation de l'Aviation Civile Internationale), ou ICAO (International Civil Aviation Organization) en anglais.

Dans un mode de réalisation particulier, à l'étape a) :

- on compare la pente dudit axe d'approche corrigé à une pente auxiliaire représentant la pente maximale volable par l'aéronef ; et
- si la pente dudit axe d'approche corrigé est supérieure à ladite pente auxiliaire, on émet un message indiquant au pilote de l'aéronef que les performances dudit aéronef ne permettent pas de voler suivant ledit axe d'approche corrigé.

En outre, avantageusement, on présente à un pilote de l'aéronef, sur au moins un écran de visualisation, des premier et second moyens d'indication présentant respectivement ledit axe d'approche principal et ledit axe d'approche corrigé.

Dans le cadre de la présente invention, ladite correction verticale permettant de déterminer l'axe d'approche corrigé peut être réalisée de différentes manières. Dans un mode de réalisation préféré, on détermine, à l'étape a2), ladite correction verticale et ledit axe d'approche corrigé, en tenant compte de performances courantes de l'aéronef.

Ainsi, on adapte l'axe d'approche corrigé à la situation effective courante de l'aéronef. On notera que, pour ce faire, les performances de l'aéronef sont connues généralement, automatiquement, par des systèmes usuels embarqués sur ce dernier.

Dans ce mode de réalisation préféré, dans une première variante, on détermine ledit axe d'approche corrigé, à l'aide d'une correction en pente, la pente P2 dudit axe d'approche corrigé vérifiant la relation suivante :

$$P2 = \text{arctg} \, [(H.\text{tg}P0) \, / \, (H.(\text{tg}P0 \, / \, \text{tg}P1) - \Delta H)]$$

dans laquelle :

- tg représente la tangente ;
- arctg représente l'inverse de la tangente ;
- P0 représente une pente définissant un cône de sécurité relatif à une approche de précision de catégorie 1 ;
- P1 représente la pente dudit axe d'approche principal ;
- H représente ladite hauteur de décision ; et
- $\Delta H$ représente une marge verticale dépendant des performances courantes de l'aéronef.

En outre, dans une seconde variante, on détermine ledit axe d'approche corrigé, comme un axe :

- qui est parallèle audit axe d'approche principal ;
- qui est translaté horizontalement en aval dans le sens de vol de l'aéronef ; et
- dont la translation horizontale $\Delta L$ vérifie la relation suivante :

$$\Delta L = \Delta H \, / \, \text{tg} \, P0$$

dans laquelle :

- ■ tg représente la tangente ;
- ■ ΔH représente une marge verticale dépendant des performances courantes de l'aéronef ; et
- ■ P0 représente une pente définissant un cône de sécurité relatif à une approche de précision de catégorie 1.

Par ailleurs, dans le cadre de la présente invention, on peut également déterminer ledit axe d'approche corrigé à ladite étape a2 :

- à l'aide d'une première correction en pente, la pente dudit axe d'approche corrigé correspondant à la pente dudit axe d'approche principal, augmentée d'une valeur de pente prédéterminée ;
- à l'aide d'une seconde correction en pente, la pente dudit axe d'approche corrigé correspondant à la pente dudit axe d'approche principal, multipliée par une valeur prédéterminée ;
- à l'aide d'une correction en hauteur de valeur constante.

La présente invention concerne également un dispositif d'aide au pilotage d'un aéronef, en particulier d'un avion de transport militaire, qui est destiné à aider au pilotage de l'aéronef au moins lors d'une approche autonome de type précité.

Pour ce faire, selon l'invention, ledit dispositif du type comportant :

- un système de gestion de vol pour déterminer un axe d'approche ; et
- un système de guidage pour aider à guider l'aéronef suivant ledit axe d'approche au moins jusqu'à une hauteur de décision, exclusivement à l'aide d'informations disponibles à bord de l'aéronef,

est remarquable en ce que ledit système de gestion de vol comporte :

- un premier moyen pour déterminer un axe d'approche principal qui est représentatif d'une approche de précision de catégorie 1 ; et
- un second moyen pour déterminer, d'une part, une correction vertical et, d'autre part, à partir de cette correction verticale et dudit axe d'approche principal, un axe d'approche corrigé qui présente verticalement une marge supplémentaire relativement au terrain à survoler par rapport audit axe d'approche principal, ledit axe d'approche corrigé étant transmis audit système de guidage pour qu'il aide à guider l'aéronef suivant cet axe d'approche corrigé.

Dans un mode de réalisation particulier, ledit dispositif comporte, de plus, un moyen de surveillance pour :

- comparer la pente dudit axe d'approche corrigé à une pente auxiliaire représentant la pente maximale volable par l'aéronef ; et
- si la pente dudit axe d'approche corrigé est supérieure à ladite pente auxiliaire, émettre un message indiquant au pilote de l'aéronef que les performances dudit aéronef ne permettent pas de voler suivant ledit axe d'approche corrigé.

En outre, avantageusement, le dispositif conforme à l'invention peut comporter de plus :

- des moyens d'affichage pour présenter à un pilote de l'aéronef, sur au moins un écran de visualisation, des premier et second moyens d'indication présentant respectivement ledit axe d'approche principal et ledit axe d'approche corrigé ; et/ou
- des moyens d'interface permettant à un pilote d'entrer au moins une valeur de hauteur de décision, par exemple dans le système de gestion de vol.

Les figures du dessin annexé feront bien comprendre comment l'invention peut être réalisée. Sur ces figures, des références identiques désignent des éléments semblables.

La figure 1 est le schéma synoptique d'un dispositif d'aide au pilotage conforme à l'invention.
Les figures 2 et 3 sont des graphiques permettant de mettre en évidence les avantages de la présente invention, respectivement dans deux modes de réalisation différents.

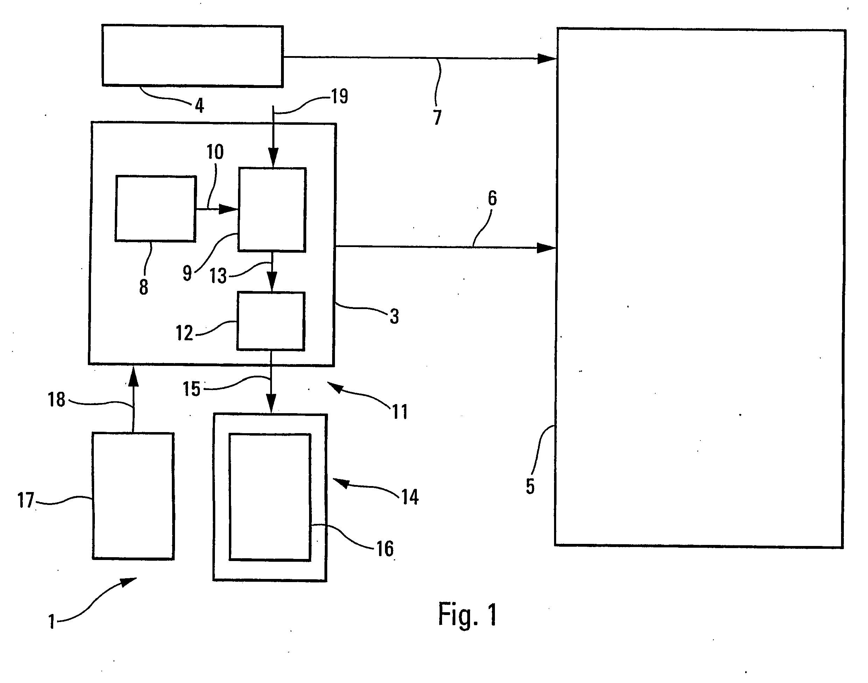

Le dispositif 1 conforme à l'invention et représenté schématiquement sur la figure 1 est destiné à aider au pilotage d'un aéronef, en particulier d'un avion de transport militaire, au moins lors d'une approche autonome d'une piste d'atterrissage 2 en vue d'un atterrissage.

Pour ce faire, ledit dispositif 1 comporte :

- un système de gestion de vol 3, par exemple de type FMS ("Flight Management System" en anglais), qui permet de déterminer un axe d'approche ;
- un ensemble 4 de sources d'informations usuelles, comprenant notamment des moyens de localisation ; et
- un système de guidage 5 qui est relié par l'intermédiaire de liaisons 6 et 7 respectivement audit système de gestion de vol 3 et audit ensemble 4 et qui est destiné à aider à guider l'aéronef suivant l'axe d'approche déterminé par ledit système de gestion de vol 3, de façon autonome, c'est-à-dire exclusivement à l'aide d'informations disponibles à bord de l'aéronef (et issues au moins en partie dudit ensemble 4), et ceci jusqu'à une hauteur de décision H précisée ci-dessous.

Dans un mode de réalisation préféré, lesdits moyens de guidage 5 comportent les moyens suivants, non représentés spécifiquement :

- un moyen de calcul qui est destiné à déterminer de façon usuelle des consignes de pilotage, à partir d'informations reçues dudit système de gestion de vol 3 par l'intermédiaire de la liaison 6 et dudit ensemble 4 par l'intermédiaire de la liaison 7 ;
- au moins un moyen d'aide au pilotage, par exemple un dispositif de pilotage automatique et/ou un directeur de vol, qui détermine à partir des consignes de pilotage reçues dudit moyen de calcul des ordres de pilotage de l'aéronef ; et
- des moyens d'actionnement d'organes commandés, tels que par exemple des gouvernes (de direction, de profondeur, ...) de l'aéronef, auxquels on applique les ordres de pilotage ainsi déterminés.

Selon l'invention, ledit système de gestion de vol 3 comporte :

- un moyen 8 qui comprend, par exemple, une base de données non représentée et qui permet de déterminer, de façon usuelle, un axe d'approche principal A1. Selon l'invention, cet axe d'approche principal A1 est représentatif d'une approche de précision aux instruments de catégorie 1. On notera qu'une telle approche de précision de catégorie 1 est notamment décrite dans l'annexe 10 de l'OACI (Organisation de l'Aviation Civile Internationale), ou ICAO (International Civil Aviation Organization) en anglais ; et
- un moyen 9 qui est relié par l'intermédiaire d'une liaison 10 audit moyen 8 et qui est formé de manière à déterminer :

   ■ d'une part, une correction verticale ; et
   ■ d'autre part, à partir de cette correction verticale et dudit axe d'approche principal A1 reçu dudit moyen 8, un axe d'approche corrigé A2 qui présente verticalement une marge supplémentaire ΔH relativement au terrain à survoler par rapport audit axe d'approche principal A1 (à ladite hauteur de décision H).

De plus, selon l'invention, ledit axe d'approche corrigé A2 qui est déterminé par ledit moyen 9 est transmis, par l'intermédiaire de la liaison 6, au système de guidage 5 afin que ledit système de guidage 5 aide à guider l'aéronef suivant cet axe d'approche corrigé A2. Pour ce faire, le guidage de l'aéronef peut être réalisé soit automatiquement, par exemple par l'intermédiaire d'un dispositif de pilotage automatique, soit manuellement par le pilote de l'aéronef, par exemple à l'aide d'un directeur de vol.

Ainsi, le dispositif 1 conforme à l'invention fait suivre à l'aéronef, lors de l'approche de la piste d'atterrissage 2, un axe d'approche corrigé A2 qui présente à la hauteur de décision H une marge verticale ΔH relativement au terrain à survoler, par rapport à un axe d'approche A1 déterminé de façon usuelle pour une approche de précision de catégorie 1. Par conséquent, cette marge verticale ΔH permet de sécuriser le vol de l'aéronef par rapport au sol lors de l'approche autonome mise en oeuvre par le dispositif 1, pour laquelle les performances courantes de l'aéronef sont moindres que celles existant pour une approche usuelle de précision aux instruments de catégorie 1.

En outre, comme le moyen 8 utilise des informations déterminées de façon usuelle pour une approche de précision de catégorie 1, la mise en oeuvre de l'invention est facilitée.

Dans un mode de réalisation particulier, ledit dispositif 1 comporte, de plus, un moyen de surveillance 11 qui est par exemple intégré, au moins en partie, dans ledit système de gestion de vol 3, et qui comporte :

- un moyen 12 qui est relié par l'intermédiaire d'une liaison 13 audit moyen 9 et qui est formé de manière à comparer la pente P2 dudit axe d'approche corrigé A2 déterminé par ledit moyen 9, à une pente auxiliaire qui représente la pente maximale volable par l'aéronef, conformément à sa certification ; et
- un moyen 14 (par exemple des moyens d'affichage) qui est relié par l'intermédiaire d'une liaison 15 audit moyen 12 et qui est formé de manière à émettre un message (sonore et/ou visuel) indiquant au pilote de l'aéronef que les performances dudit aéronef ne permettent pas de voler suivant ledit axe d'approche corrigé A2, lorsque la pente P2 de ce dernier devient supérieure à ladite pente auxiliaire.

Le moyen 14 peut présenter ce message, notamment, sur un écran de visualisation 16 qui fait, par exemple, partie dudit système de gestion de vol 3.

En outre, dans un mode de réalisation particulier, ledit dispositif 1 comporte également des moyens d'affichage, par exemple ledit moyen 14, pour présenter à un pilote de l'aéronef, sur au moins un écran de visualisation du poste de pilotage, et en particulier sur l'écran de visualisation 16, des premiers et seconds moyens d'indication (par exemple des tracés de trajectoire visualisés sur une partie d'écran illustrant un plan vertical) présentant respectivement ledit axe d'approche principal A1 et ledit axe d'approche corrigé A2.

Dans le cadre de la présente invention, ledit moyen 9 peut déterminer de différentes manières ladite correction verticale permettant de déterminer l'axe d'approche corrigé A2.

Dans un mode de réalisation préféré, ledit moyen 9 détermine ladite correction verticale et ledit axe d'approche corrigé A2, en tenant compte de performances courantes de l'aéronef. Ainsi, le dispositif 1 conforme à l'invention adapte l'axe d'approche corrigé A2 à la situation effective courante de l'aéronef. Pour ce faire, les performances de l'aéronef utilisées sont reçues automatiquement par le moyen 9 (via une liaison 19 représentée de façon générale) de systèmes usuels (non représentés) qui sont embarqués sur ledit aéronef.

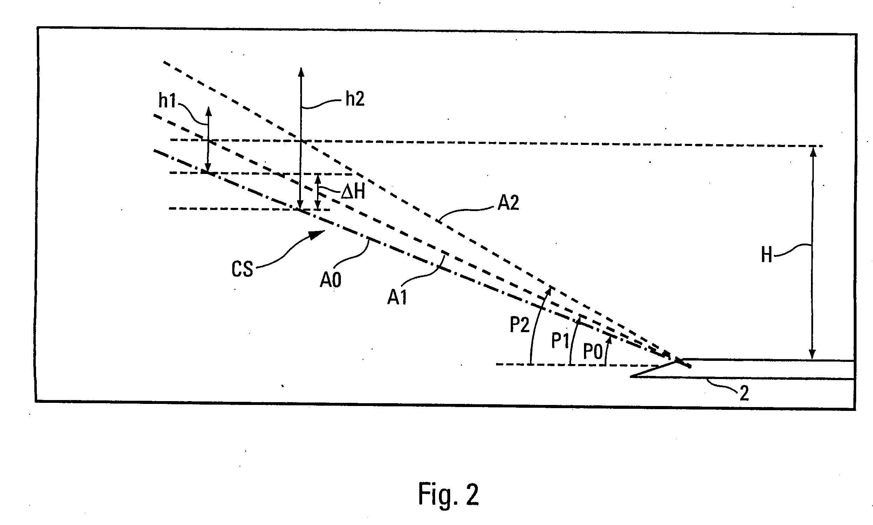

Dans ce mode de réalisation préféré, dans une première variante représentée sur la figure 2, ledit moyen 9 détermine ledit axe d'approche corrigé A2, à l'aide d'une correction en pente. La pente P2 dudit axe d'approche corrigé A2 vérifie la relation suivante :

$$P2 = arctg\,[(H.tgP0)\,/\,(H.(tgP0\,/\,tgP1)\,-\,\Delta H)]$$

dans laquelle :

- tg représente la tangente ;
- arctg représente l'inverse de la tangente ;
- P0 représente une pente (par exemple 2°) définissant un cône de sécurité CS qui est relatif à une approche de précision aux instruments de catégorie 1 et qui est illustré sur la figure 2 par une ligne A0 montrant son extrémité inférieure ;
- P1 représente la pente (par exemple 3°) dudit axe d'approche principal A1 ;
- H représente ladite hauteur de décision, par exemple 200 pieds (environ 60 mètres), qui peut être entrée dans le système de gestion de vol 3 par un pilote de l'aéronef, en particulier à l'aide d'un moyen interface 17 usuel qui est relié par l'intermédiaire d'une liaison 18 audit système de gestion de vol 3 ; et
- ΔH représente ladite marge verticale qui dépend des performances courantes de l'aéronef.

Comme on peut le voir sur la figure 2, à la hauteur de décision H, le cône de sécurité CS présente :

- une hauteur h1 réduite, par rapport à l'axe d'approche principal A1 ; et
- une hauteur h2 supérieure à la hauteur h1 (d'une valeur 2ΔH), par rapport à l'axe d'approche corrigé A2.

Par conséquent, comme les performances de l'aéronef lors de l'approche autonome considérée dans la présente invention ne sont pas capables de garantir que l'aéronef restera dans le cône de sécurité CS en suivant l'axe d'approche principal A1 (relatif à une approche de précision), le dispositif 1 conforme à l'invention réalise une correction en hauteur permettant de rajouter une marge ΔH vis-à-vis du terrain survolé: Ceci permet d'élargir indirectement le cône de sécurité à une hauteur h2, lorsque l'aéronef est guidé suivant ledit axe d'approche corrigé A2, par rapport au cône de sécurité CS défini pour l'axe d'approche principal A1.

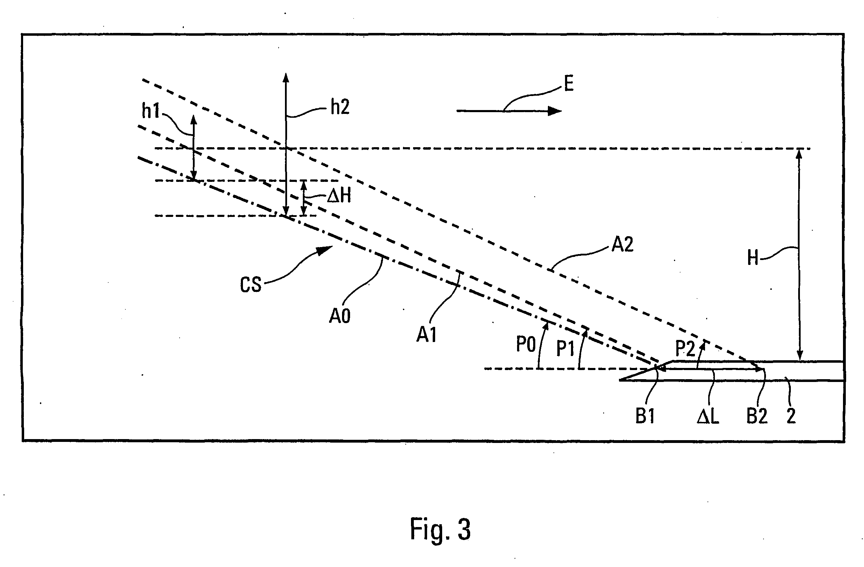

En outre, dans une seconde variante dudit mode de réalisation préféré précité, comme représenté sur la figure 3, ledit moyen 9 détermine ledit axe d'approche corrigé, comme un axe A2 :

- qui est parallèle audit axe d'approche principal A1 ;
- qui est translaté horizontalement en aval dans le sens E de vol de l'aéronef ; et
- dont la translation horizontale ΔL vérifie la relation suivante :

$$\Delta L = \Delta H\,/\,tg\,P0$$

On obtient ainsi une translation ∆L du point d'ancrage au sol de l'axe d'approche, d'un point B1 pour l'axe d'approche principal A1 à un point B2 pour l'axe d'approche corrigé A2.

On notera que, cette translation du point d'ancrage au sol engendre une augmentation de la distance d'atterrissage, puisque le point d'impact sur la piste d'atterrissage 2 est reculé. Aussi, à la hauteur de décision H, il est conseillé au pilote d'augmenter sa pente d'approche en visant le seuil de piste de manière à limiter la distance d'atterrissage. Le dispositif 1 peut également comporter un moyen d'alerte (non représenté) pour prévenir l'équipage dans le cas où la distance d'atterrissage serait trop longue par rapport à la longueur de la piste d'atterrissage 2.

D'autres modes de réalisation sont également possibles pour permettre au moyen 9 de déterminer l'axe d'approche corrigé A2.

Dans un premier mode de réalisation alternatif, ledit moyen 9 détermine ledit axe d'approche corrigé A2 à l'aide d'une première correction en pente. Dans ce cas, la pente dudit axe d'approche corrigé A2 correspondant à la pente dudit axe d'approche principal A1, augmentée d'une valeur de pente prédéterminée, par exemple 0,3°.

En outre, dans un deuxième mode de réalisation alternatif, ledit moyen 9 détermine ledit axe d'approche corrigé A2 à l'aide d'une seconde correction en pente. Dans ce cas, la pente dudit axe d'approche corrigé A2 correspondant à la pente dudit axe d'approche principal A1, multipliée par une valeur prédéterminée, par exemple 0,1.

Dans ces deux derniers modes de réalisation alternatifs, la correction ne dépend pas de la hauteur de décision H, ni des performances effectives de l'aéronef.

Par ailleurs, dans un troisième mode de réalisation alternatif, ledit moyen 9 détermine l'axe d'approche corrigé A2 à l'aide d'une correction en hauteur de valeur constante. Dans ce cas également, la correction ne dépend pas des performances effectives de l'aéronef. De préférence, cette correction prend en compte des hypothèses conservatives, en fixant la marge nécessaire à des performances nominales de l'aéronef.

Par conséquent, dans le cadre de la présente invention, la trajectoire d'approche autonome prise en compte sera une trajectoire ou axe d'approche corrigé A2 qui est définie à partir d'un axe d'approche principal A1 représentatif d'une approche usuelle de précision aux instruments de catégorie 1. Les informations relatives à cet axe d'approche principal A1 sont généralement sauvegardées dans une base de données du moyen 8. Elles sont, en général, également indiquées sur une carte d'approche papier qui est fournie à l'équipage. En vol, l'équipage intègre, par exemple, à travers le moyen d'interface 17 du système de gestion de vol 3, une approche autonome dans son plan de vol. Les informations relatives à l'axe d'approche principal A1 sont alors extraites de la base de données. L'équipage informe également le système de gestion de vol 3 de la hauteur de décision H de l'approche par l'intermédiaire dudit moyen d'interface 17. Cette hauteur de décision H est définie sur la carte d'approche. A une distance prédéterminée de l'aéroport de destination, par exemple à 100 NM (environ 180 kilomètres), le moyen 9 du système de gestion de vol 3 calcule la correction verticale, de préférence en fonction de la hauteur de décision H fournie par l'équipage et des performances effectives de l'aéronef reçues par l'intermédiaire de la liaison 19 de systèmes non représentés de l'aéronef, et en particulier d'un système de localisation. Ledit moyen 9 détermine alors l'axe d'approche corrigé A2 que devra suivre l'aéronef, à l'aide du système de guidage 5.

## Revendications

1. Procédé d'aide au pilotage d'un aéronef, qui est destiné à aider au pilotage de l'aéronef au moins lors d'une approche autonome d'une piste d'atterrissage (2) en vue d'un atterrissage, procédé selon lequel :

   a) on détermine un axe d'approche ; et
   b) on guide l'aéronef suivant ledit axe d'approche au moins jusqu'à une hauteur de décision (H), à l'aide exclusivement de moyens embarqués sur l'aéronef,

   **caractérisé en ce que :**

   - à l'étape a) :

      a1) on détermine un axe d'approche principal (A1) qui est représentatif d'une approche de précision de catégorie 1 ; et
      a2) on détermine une correction verticale et, à partir de cette correction verticale et dudit axe d'approche principal (A1), on détermine un axe d'approche corrigé (A2) qui présente verticalement une marge (∆H) supplémentaire relativement au terrain à survoler par rapport audit axe d'approche principal (A1) ; et

   - à l'étape b), on guide ledit aéronef suivant ledit axe d'approche corrigé (A2).

**2.** Procédé selon la revendication 1,
**caractérisé en ce qu'**à l'étape a) :

- on compare la pente (P2) dudit axe d'approche corrigé (A2) à une pente auxiliaire représentant la pente maximale volable par l'aéronef ; et
- si la pente (P2) dudit axe d'approche corrigé (A2) est supérieure à ladite pente auxiliaire, on émet un message indiquant au pilote de l'aéronef que les performances dudit aéronef ne permettent pas de voler suivant ledit axe d'approche corrigé (A2).

**3.** Procédé selon l'une des revendications 1 et 2,
**caractérisé en ce que** l'on présente à un pilote de l'aéronef, sur au moins un écran de visualisation (16), des premier et second moyens d'indication présentant respectivement ledit axe d'approche principal (A1) et ledit axe d'approche corrigé (A2).

**4.** Procédé selon l'une quelconque des revendications 1 à 3,
**caractérisé en ce qu'**à l'étape a2), on détermine ladite correction verticale et ledit axe d'approche corrigé (A2) en tenant compte de performances courantes de l'aéronef.

**5.** Procédé selon la revendication 4,
**caractérisé en ce qu'**à l'étape a2), on détermine ledit axe d'approche corrigé (A2), à l'aide d'une correction en pente, la pente P2 dudit axe d'approche corrigé (A2) vérifiant la relation suivante :

$$P2 = arctg \ [(H.tgP0) \ / \ (H.(tgP0 \ / \ tgP1) - \Delta H)]$$

dans laquelle :

- tg représente la tangente ;
- arctg représente l'inverse de la tangente ;
- P0 représente une pente définissant un cône de sécurité (CS) relatif à une approche de précision de catégorie 1 ;
- P1 représente la pente dudit axe d'approche principal (A1) ;
- H représente ladite hauteur de décision ; et
- $\Delta$H représente une marge verticale dépendant des performances courantes de l'aéronef.

**6.** Procédé selon la revendication 4,
**caractérisé en ce qu'**à l'étape a2), on détermine ledit axe d'approche corrigé (A2), comme un axe :

- qui est parallèle audit axe d'approche principal (A1) ;
- qui est translaté horizontalement en aval dans le sens de vol de l'aéronef ; et
- dont la translation horizontale $\Delta$L vérifie la relation suivante :

$$\Delta L = \Delta H \ / \ tg \ P0$$

dans laquelle :

. tg représente la tangente ;
. $\Delta$H représente une marge verticale dépendant des performances courantes de l'aéronef ; et
. P0 représente une pente définissant un cône de sécurité (CS) relatif à une approche de précision de catégorie 1.

**7.** Procédé selon l'une quelconque des revendications 1 à 3,
**caractérisé en ce qu'**à l'étape a2), on détermine ledit axe d'approche corrigé (A2) à l'aide d'une correction en pente, la pente dudit axe d'approche corrigé (A2) correspondant à la pente dudit axe d'approche principal (A1), augmentée d'une valeur de pente prédéterminée.

**8.** Procédé selon l'une quelconque des revendications 1 à 3,
**caractérisé en ce qu'**à l'étape a2), on détermine ledit axe d'approche corrigé (A2) à l'aide d'une correction en pente, la pente dudit axe d'approche corrigé (A2) correspondant à la pente dudit axe d'approche principal (A1), multipliée par une valeur prédéterminée.

**9.** Procédé selon l'une quelconque des revendications 1 à 3,
**caractérisé en ce qu'**à l'étape a2), on détermine ledit axe d'approche corrigé (A2) à l'aide d'une correction en hauteur de valeur constante.

**10.** Dispositif d'aide au pilotage d'un aéronef, qui est destiné à aider au pilotage de l'aéronef au moins lors d'une approche autonome d'une piste d'atterrissage (2) en vue d'un atterrissage, ledit dispositif (1) comportant :

- un système de gestion de vol (3) pour déterminer un axe d'approche ; et
- un système de guidage (5) pour aider à guider l'aéronef suivant ledit axe d'approche au moins jusqu'à une hauteur de décision (H), exclusivement à l'aide d'informations disponibles à bord de l'aéronef,

**caractérisé en ce que** ledit système de gestion de vol (3) comporte :

- un premier moyen (8) pour déterminer un axe d'approche principal (A1) qui est représentatif d'une approche de précision de catégorie 1 ; et
- un second moyen (9) pour déterminer, d'une part, une correction verticale et, d'autre part, à partir de cette correction verticale et dudit axe d'approche principal (A1), un axe d'approche corrigé (A2) qui présente verticalement une marge supplémentaire relativement au terrain à survoler par rapport audit axe d'approche principal (A1), ledit axe d'approche corrigé (A2) étant transmis audit système de guidage (5) pour qu'il aide à guider l'aéronef suivant cet axe d'approche corrigé (A2).

**11.** Dispositif selon la revendication 10,
**caractérisé en ce qu'**il comporte, de plus, un moyen de surveillance (11) pour :

- comparer la pente (P2) dudit axe d'approche corrigé (A2) à une pente auxiliaire représentant la pente maximale volable par l'aéronef ; et
- si la pente (P2) dudit axe d'approche corrigé (A2) est supérieure à ladite pente auxiliaire, émettre un message indiquant au pilote de l'aéronef que les performances dudit aéronef ne permettent pas de voler suivant ledit axe d'approche corrigé (A2).

**12.** Dispositif selon l'une des revendications 10 et 11,
**caractérisé en ce qu'**il comporte, de plus, des moyens d'affichage (14) pour présenter à un pilote de l'aéronef, sur au moins un écran de visualisation (16), des premier et second moyens d'indication présentant respectivement ledit axe d'approche principal (A1) et ledit axe d'approche corrigé (A2).

**13.** Dispositif selon l'une des revendications 10 à 12,
**caractérisé en ce qu'**il comporte, de plus, des moyens d'interface (17) permettant à un pilote d'entrer au moins une valeur de hauteur de décision (H).

**14.** Aéronef,
**caractérisé en ce qu'**il comporte un dispositif (1) tel que celui spécifié sous l'une quelconque des revendications 10 à 13.

**Claims**

**1.** A method for assisting with flying an aircraft, which is intended to assist with flying the aircraft at least during an autonomous landing approach to a runway (2) with a view to landing, in which method:

a) a line of approach is determined; and
b) the aircraft is guided along said line of approach at least as far as a decision height (H) using only means on board the aircraft,

**characterized in that:**

- in step a):

a1) a main line of approach (A1) which is representative of a category 1 precision approach is determined; and
a2) a vertical correction is determined and, from this vertical correction and from said main line of approach (A1), a corrected line of approach (A2) is determined which vertically exhibits a greater margin ($\Delta$H) relative to the terrain being overflown than said main line of approach (A1); and

- in step b), said aircraft is guided along said corrected line of approach (A2).

2. The method as claimed in claim 1,
**characterized in that**, in step a):

- the gradient (P2) of said corrected line of approach (A2) is compared against an auxiliary gradient representing the maximum gradient that the aircraft can fly; and
- if the gradient (P2) of said corrected line of approach (A2) is steeper than said auxiliary gradient, a message is emitted informing the pilot of the aircraft that the performance of said aircraft will not allow it to fly along said corrected line of approach (A2).

3. The method as claimed in one of claims 1 and 2,
**characterized in that** the pilot of the aircraft is presented, on at least one display screen (16), with first and second indicating means showing said main line of approach (A1) and said corrected line of approach (A2), respectively.

4. The method as claimed in any one of claims 1 to 3,
**characterized in that** in step a2) said vertical correction and said corrected line of approach (A2) are determined taking current aircraft performance into consideration.

5. The method as claimed in claim 4,
**characterized in that** in step a2) said corrected line of approach (A2) is determined using a gradient correction, the gradient P2 of said corrected line of approach (A2) satisfying the following relationship:

$$P2 = \text{arctan } [(H.\tan P0)/(H.(\tan P0/\tan P1) - \Delta H)]$$

in which:

- tan denotes the tangent;
- arctan denotes the inverse of the tangent;
- P0 denotes a gradient that defines a safety cone (CS) relative to a category 1 precision approach;
- P1 denotes the gradient of said main line of approach (A1);
- H denotes said decision height; and
- $\Delta$H denotes a vertical margin dependent on current aircraft performance.

6. The method as claimed in claim 4,
**characterized in that** in step a2) said corrected line of approach (A2) is determined as being a line:

- which is parallel to said main line of approach (A1);
- which is translated horizontally downstream in the direction in which the aircraft is flying; and
- the horizontal translation $\Delta$L of which satisfies the following relationship:

$$\Delta L = \Delta H/\tan P0$$

in which:

• tan denotes the tangent;
• ΔH denotes a vertical margin dependent on current aircraft performance; and
• P0 denotes a gradient that defines a safety cone (CS) relative to a category 1 precision approach.

**7.** The method as claimed in any one of claims 1 to 3,
**characterized in that** in step a2) said corrected line of approach (A2) is determined using a gradient correction, the gradient of said corrected line of approach (A2) corresponding to the gradient of said main line of approach (A1) increased by a predetermined gradient magnitude.

**8.** The method as claimed in any one of claims 1 to 3,
**characterized in that** in step a2) said corrected line of approach (A2) is determined using a gradient correction, the gradient of said corrected line of approach (A2) corresponding to the gradient of said main line of approach (A1) multiplied by a predetermined value.

**9.** The method as claimed in any one of claims 1 to 3,
**characterized in that** in step a2) said corrected line of approach (A2) is determined using a height correction of constant magnitude.

**10.** A device for assisting with flying an aircraft, which is intended to assist with flying the aircraft at least during an autonomous landing approach to a runway (2) with a view to landing, said device (1) comprising:

- a flight control system (3) for determining a line of approach; and
- a guidance system (5) for assisting with guiding the aircraft along said line of approach at least as far as a decision height (H), assisted solely by information available on board the aircraft,

**characterized in that** said flight control system (3) comprises:

- a first means (8) for determining a main line of approach (A1) which is representative of a category 1 precision approach; and
- a second means (9) for determining, on the one hand, a vertical correction and, on the other hand, from this vertical correction and from said main line of approach (A1), a corrected line of approach (A2) which vertically exhibits a greater margin relative to the terrain being overflown than said main line of approach (A1), said corrected line of approach (A2) being transmitted to said guidance system (5) so that it can assist with guiding the aircraft along this corrected line of approach (A2).

**11.** The device as claimed in claim 10,
**characterized in that** it additionally comprises a monitoring means (11) for:

- comparing the gradient (P2) of said corrected line of approach (A2) against an auxiliary gradient representing the maximum gradient that the aircraft can fly; and
- if the gradient (P2) of said corrected line of approach (A2) is steeper than said auxiliary gradient, emitting a message informing the pilot of the aircraft that the performance of said aircraft will not allow it to fly along said corrected line of approach (A2).

**12.** The device as claimed in one of claims 10 and 11,
**characterized in that** it additionally comprises display means (14) for presenting a pilot of the aircraft, on at least one display screen (16), with first and second indicating means showing said main line of approach (A1) and said corrected line of approach (A2), respectively.

**13.** The device as claimed in one of claims 10 to 12,
**characterized in that** it additionally comprises interface means (17) allowing the pilot to input at least one decision height value (H).

**14.** An aircraft,
**characterized in that** it comprises a device (1) like the one specified in any one of claims 10 to 13.

**Patentansprüche**

1. Verfahren zur Steuerungshilfe eines Flugzeugs, das dazu vorgesehen ist, das Steuern des Flugzeugs zumindest während eines autonomen Anflugs einer Landebahn (2) im Hinblick auf eine Landung zu unterstützen, wobei bei dem Verfahren:

   a) eine Anfluglinie bestimmt wird und
   b) das Flugzeug der Anfluglinie folgend mindestens bis zu einer Entscheidungshöhe (H) ausschließlich mithilfe von im Flugzeug mitgeführten Mitteln geführt wird,

   **dadurch gekennzeichnet, dass:**

   - in Schritt a):

      a1) eine Hauptanfluglinie (A1), die für einen Präzisionsanflug der Kategorie 1 repräsentativ ist, bestimmt wird und
      a2) eine vertikale Korrektur bestimmt wird und ausgehend von dieser vertikalen Korrektur und der Hauptanfluglinie (A1) eine korrigierte Anfluglinie (A2) bestimmt wird, die gegenüber der Hauptanfluglinie (A1) vertikal eine zusätzliche Marge (ΔH) bezogen auf das zu überfliegende Gelände aufweist und

   - in Schritt b) das Flugzeug der korrigierten Anfluglinie (A2) folgend geführt wird.

2. Verfahren nach Anspruch 1,
   **dadurch gekennzeichnet, dass** in Schritt a):

   - die Steigung (P2) der korrigierten Anfluglinie (A2) mit einer Hilfssteigung, welche die maximal von dem Flugzeug fliegbare Steigung repräsentiert, verglichen wird und
   - wenn die Steigung (P2) der korrigierten Anfluglinie (A2) größer als die Hilfssteigung ist, eine Nachricht abgegeben wird, die dem Piloten des Flugzeugs anzeigt, dass die Flugleistungen des Flugzeugs es nicht zulassen, der korrigierten Anfluglinie (A2) folgend zu fliegen.

3. Verfahren nach Anspruch 1 oder 2,
   **dadurch gekennzeichnet, dass** einem Piloten des Flugzeugs auf mindestens einem Anzeigebildschirm (16) erste und zweite Anzeigemittel angezeigt werden, welche die Hauptanfluglinie (A1) beziehungsweise die korrigierte Anfluglinie (A2) darstellen.

4. Verfahren nach einem der Ansprüche 1 bis 3,
   **dadurch gekennzeichnet, dass** in Schritt a2) die vertikale Korrektur und die korrigierte Anfluglinie (A2) unter Berücksichtigung aktueller Flugleistungen des Flugzeugs bestimmt werden.

5. Verfahren nach Anspruch 4,
   **dadurch gekennzeichnet, dass** in Schritt a2) die korrigierte Anfluglinie (A2) mithilfe einer Steigungskorrektur bestimmt wird, wobei die Steigung P2 der korrigierten Anfluglinie (A2) die folgende Beziehung erfüllt:

$$P2 = arctg\ [(H.tgP0) / (H.(tgP0 / tgP1) - ΔH)]$$

   in der:

   - tg den Tangens bezeichnet,
   - arctg die Umkehrfunktion des Tangens bezeichnet,
   - P0 eine Steigung bezeichnet, die einen auf einen Präzisionsanflug der Kategorie 1 bezogenen Sicherheitskonus (CS) definiert,
   - P1 die Steigung der Hauptanfluglinie (A1) bezeichnet,
   - H die Entscheidungshöhe bezeichnet und
   - ΔH eine vertikale Marge bezeichnet, die von den aktuellen Flugleistungen des Flugzeugs abhängig ist.

**6.** Verfahren nach Anspruch 4,
**dadurch gekennzeichnet, dass** in Schritt a2) die korrigierte Anfluglinie (A2) bestimmt wird, als eine Linie:

- die zu der Hauptanfluglinie (A1) parallel ist,
- die in Flugrichtung des Flugzeugs horizontal vorwärts verschoben ist und
- deren horizontale Verschiebung ΔL die folgende Beziehung erfüllt:

$$\Delta L = \Delta H / tg\ P0$$

in der:

■ tg den Tangens bezeichnet,
■ ΔH eine vertikale Marge bezeichnet, die von dem aktuellen Flugleistungen des Flugzeugs abhängig ist und
■ P0 eine Steigung bezeichnet, die einen auf einen Präzisionsanflug der Kategorie 1 bezogenen Sicherheitskonus (CS) definiert.

**7.** Verfahren nach einem der Ansprüche 1 bis 3,
**dadurch gekennzeichnet, dass** in Schritt a2) die korrigierte Anfluglinie (A2) mittels einer Steigungskorrektur bestimmt wird, wobei die Steigung der korrigierten Anfluglinie (A2) der um einen vorgegebenen Steigungswert erhöhten Steigung der Hauptanfluglinie (A1) entspricht.

**8.** Verfahren nach einem der Ansprüche 1 bis 3,
**dadurch gekennzeichnet, dass** in Schritt a2) die korrigierte Anfluglinie (A2) mittels einer Steigungskorrektur bestimmt wird, wobei die Steigung der korrigierten Anfluglinie (A2) der mit einem vorgegebenen Wert multiplizierten Steigung der Hauptanfluglinie (A1) entspricht.

**9.** Verfahren nach einem der Ansprüche 1 bis 3,
**dadurch gekennzeichnet, dass** in Schritt a2) die korrigierte Anfluglinie (A2) mittels einer Höhenkorrektur von konstanter Größe bestimmt wird.

**10.** Vorrichtung zur Steuerungshilfe eines Flugzeugs, die dazu vorgesehen ist, das Steuern des Flugzeugs zumindest während eines autonomen Anflugs einer Landebahn (2) im Hinblick auf eine Landung zu unterstützen, wobei die Vorrichtung (1) Folgendes umfasst:

- ein Flugleitsystem (3) zur Bestimmung einer Anfluglinie und
- ein Führungssystem (5), um das Führen des Flugzeugs der Anfluglinie folgend mindestens bis zu einer Entscheidungshöhe (H) ausschließlich mithilfe von an Bord des Flugzeugs verfügbaren Informationen zu unterstützen,

**dadurch gekennzeichnet, dass** das Flugleitsystem (3) Folgendes umfasst:

- ein erstes Mittel (8) zum Bestimmen einer Hauptanfluglinie (A1), die für einen Präzisionsanflug der Kategorie 1 repräsentativ ist und
- ein zweites Mittel (9), um einerseits eine vertikale Korrektur und andererseits ausgehend von dieser vertikalen Korrektur und der Hauptanfluglinie (A1) eine korrigierte Anfluglinie (A2) zu bestimmen, die gegenüber der Hauptanfluglinie (A1) vertikal eine zusätzlich Marge bezogen auf zu überfliegende Gelände aufweist, wobei die korrigierte Anfluglinie (A2) an das Führungssystem (5) übertragen wird, damit es das Führen des Flugzeugs dieser korrigierten Anfluglinie (A2) folgend unterstützen kann.

**11.** Vorrichtung nach Anspruch 10,
**dadurch gekennzeichnet, dass** sie zusätzlich ein Überwachungsmittel (11) umfasst, um:

- die Steigung (P2) der korrigierten Anfluglinie (A2) mit einer Hilfssteigung, welche die maximal von dem Flugzeug fliegbare Steigung repräsentiert, zu vergleichen und
- wenn die Steigung (P2) der korrigierten Anfluglinie (A2) größer als die Hilfssteigung ist, eine Nachricht abzugeben, die dem Piloten des Flugzeugs anzeigt, dass die Flugleistungen des Flugzeugs es nicht zulassen, der korrigierten Anfluglinie (A2) folgend zu fliegen.

12. Vorrichtung nach Anspruch 10 oder 11,
**dadurch gekennzeichnet, dass** sie zusätzlich Anzeigemittel (14) umfasst, um einem Piloten des Flugzeugs auf mindestens einem Anzeigebildschirm (16) erste und zweite Anzeigemittel anzuzeigen, welche die Hauptanfluglinie (A1) beziehungsweise die korrigierte Anfluglinie (A2) darstellen.

13. Vorrichtung nach einem der Ansprüche 10 bis 12,
**dadurch gekennzeichnet, dass** sie zusätzlich Schnittstellenmittel (17) umfasst, die es einem Piloten ermöglichen, mindestens einen Entscheidungshöhenwert (H) einzugeben.

14. Flugzeug,
**dadurch gekennzeichnet, dass** es eine Vorrichtung (1) wie die unter einem der Ansprüche 10 bis 13 spezifizierte aufweist.

EP 1 971 974 B1

Fig. 1

15

Fig. 2

EP 1 971 974 B1

Fig. 3

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5593114 A

- EP 1335258 A